# EUROPEAN PATENT SPECIFICATION

(11) **EP 3 977 373 B1**
(45) Date of publication and mention of the grant of the patent: **11.06.2025**
(21) Application number: 19930224.1
(22) Date of filing: 29.05.2019
(51) Int. Cl.: H04L 41/5074, H04L 41/046, H04L 41/16

(54) **SYSTEMS, METHODS, AND COMPUTER READABLE MEDIUMS FOR CONTROLLING FEDERATION OF AUTOMATED AGENTS**
SYSTEME, VERFAHREN UND COMPUTERLESBARE MEDIEN ZUR STEUERUNG DES ZUSAMMENSCHLUSSES VON AUTOMATISCHEN AGENTEN
SYSTÈMES, PROCÉDÉS ET SUPPORTS LISIBLES PAR ORDINATEUR PERMETTANT DE COMMANDER UNE FÉDÉRATION D'AGENTS AUTOMATISÉS

(43) Date of publication of application: 06.04.2022
(73) Proprietor: Nokia Solutions and Networks Oy, 02610 Espoo (FI)
(72) Inventor: BEZAWADA, Praveen Kumar, Chengdu, Sichuan 610000 (CN); GADEY, Prem Kumar, Chennai 603103 (IN); TIRPAK, Tom, Glenview, Illinois 60025 (US)
(74) Representative: Novagraaf Technologies
(86) International application number: PCT/CN2019/089061
(87) International publication number: WO 2020/237535

(56) References cited:
- WO-A1-2013/034448
- US-A1- 2014 270 145
- US-A1- 2015 081 376
- US-A1- 2016 301 771
- US-A1- 2017 249 311
- US-A1- 2018 131 811
- US-A1- 2019 052 584
- US-A1- 2019 130 415
- US-B2- 8 930 338

## Description

### BACKGROUND

### Technical Field

Example embodiments relate, in general, to systems, methods and/or computer-readable mediums for controlling a federation of automated agents.

### Description of Related Art

When a user desires help for a technical problem, such as requesting technical support in an installation and/or maintenance of components of an infrastructure for cellular phones, the user may desire help from a group of human experts. However, the user may be requesting help at time when human expertise is not available immediately.

Accordingly, automated software agents (e.g., automated bots and/or automated expert systems) have been developed to provide help when human expertise is not available.
US2014270145A1 discloses a method for determining a best routing of a customer contact to an agent based on analysis of one or more automatically generated answers.
US2017249311A1 discloses a method where individual measures of answer quality are used to assess the quality of an answer and to generate an overall quality measure for the answer using an automatic quality scoring (AQS) algorithm.

### SUMMARY

According to claim 1, there is provided a method of controlling a federation of automated agents, the federation of automated agents including a plurality of in-service automated agents. The method comprises receiving a ticket from a terminal, routing the ticket to a number of in-service automated agents among the plurality of in-service automated agents, measuring a similarity of suggestions generated by the number of in-service automated agents among the plurality of in-service automated agents, the suggestions being suggestions for responding to the ticket, determining a subset of the suggestions based on a rating of the number of in-service automated agents and the similarity of suggestions generated by the number of in-service automated agents, the rating being based on a previous score indicative of a quality of a previous subset of suggestions provided by the number of in-service automated agents, and providing the subset of suggestions to the terminal.

The method may further comprise receiving, from the terminal, a score indicative of a quality of the subset of suggestions, and updating the rating of the number of in-service automated agents based on the score.

The ticket may include a number of fields. The method may further comprise measuring a complexity of the ticket based on at least one of the fields, and determining the number of in-service automated agents based on the complexity.

The measuring a complexity of the ticket may include measuring the complexity of the ticket based on a number of words in a description field of the ticket.

The method may further include soliciting the score indicative of the quality of the subset of suggestions provided to the terminal.

The method may further include adding the ticket and a suggestion generated by at least one of the number of in-service automated agents to a test set based on the similarity of suggestions.

The method may further include removing at least one in-service automated agent from the federation of automated agents based on the rating of the at least one in-service automated agent.

The method may further include generating, by the number of in-service automated agents in the federation of automated agents, at least one suggestion for responding to the ticket.

The generating, by the number of agents in the federation of automated agents, at least one suggestion for responding to the ticket may include reviewing a description field, comparing a description field to a training set, and generating the at least one suggestion based on the comparison of the description field to the training set.

The determining a subset of suggestions based on a rating of the number of in-service automated agents and the similarity of suggestions generated by the number of in-service automated agents may include consolidating the suggestions from the number of in-service automated agents, reviewing a rating associated with the number of in-service automated agents, and adding the suggestion to the subset of suggestions based on the review of the rating.

The method may further include adding the ticket and at least one of the suggestions to a test set in response to the score indicative of the quality of the subset of suggestions being greater than a quality rating threshold.

The method may further include adding the ticket and at least one of the suggestions to a test set in response to a level of similarity of the suggestions being greater than a similarity threshold.

According to an example, a non-transitory computer readable medium may comprise program instructions for causing an apparatus to perform any of the above methods.

According to another example, there is provided a method of adding a provisional automated agent to a federation of automated agents, the federation of automated agents including a plurality of in-service automated agents, at least some of the plurality of in-service automated agents including a list of computer-readable instructions that, when executed by a computer, cause the computer to generate suggestions for responding to tickets received from one or more terminals. The method may include receiving a ticket from a terminal, forwarding the ticket to a training manager, receiving, from the training manager, a provisional suggestion generated by the provisional automated agent, evaluating the provisional automated agent by comparing the provisional suggestion to suggestions generated by a number of in-service automated agents in the federation of automated agents, and adding the provisional automated agent to the plurality of in-service automated agents in response to the evaluating.

According to a further example, a non-transitory computer readable medium may comprise program instructions for causing an apparatus to perform the above method.

According to claim 13, an apparatus is provided to control a federation of automated agents, the federation of automated agents including a plurality of in-service automated agents. The apparatus includes at least one processor, and at least one memory including computer program code. The at least one memory and the computer program code configured to, with the at least one processor, cause the apparatus to receive a ticket from a terminal, route the ticket to a number of in-service automated agents among the plurality of in-service automated agents, measure a similarity of suggestions generated by the number of in-service automated agents among the plurality of in-service automated agents, the suggestions being suggestions for responding to the ticket, determine a subset of the suggestions based on a rating of the number of in-service automated agents and the similarity of suggestions generated by the number of in-service automated agents, the rating being based on a previous score indicative of a quality of a previous subset of suggestions provided by the number of in-service automated agents, and provide the subset of suggestions to the terminal.

The at least one memory and the computer program may be configured to, with the at least one memory, cause the apparatus to, receive, from the terminal, a score indicative of a quality of the subset of suggestions, and update the rating of the number of in-service automated agents based on the score.

The at least one memory and the computer program may be configured to, with the at least one processor, cause the apparatus to, solicit a score indicative of the quality of the subset of suggestions provided to the terminal.

The at least one memory and the computer program configured to, with the at least one memory, cause the apparatus to, generate, by the number of in-service automated agents in the federation of automated agents, at least one suggestion for responding to the ticket.

The at least one memory and the computer program may be configured to, with the at least one processor, cause the apparatus to, add the ticket and at least one of the suggestions to a test set in response to the score indicative of the quality of the subset of suggestions being greater than a quality rating threshold.

According to an example, there is provided an apparatus for controlling a federation of automated agents, the federation of automated agents including a plurality of in-service automated agents, at least some of the plurality of in-service automated agents including computer-readable instructions that, when executed by a computer, cause the computer to generate suggestions for responding to tickets received from one or more terminals, the apparatus comprising means receiving a ticket from a terminal, means for routing the ticket to a number of in-service automated agents among the plurality of in-service automated agents, means for measuring a similarity of suggestions generated by the number of in-service automated agents among the plurality of in-service automated agents, the suggestions being suggestions for responding to the ticket, means for determining a subset of the suggestions based on a rating of the number of in-service automated agents and the similarity of suggestions generated by the number of in-service automated agents, the rating being based on a previous score indicative of a quality of a previous subset of suggestions, and means for providing the subset of suggestions to the terminal.

According to another example, there is provided an apparatus for adding a provisional automated agent to a federation of automated agents, the federation of automated agents including a plurality of in-service automated agents, at least some of the plurality of in-service automated agents including a list of computer-readable instructions that, when executed by a computer, cause the computer to generate suggestions for responding to tickets received from one or more terminals, the apparatus comprising means for receiving a ticket from a terminal, means for forwarding the ticket to a training manager, means for receiving, from the training manager, a provisional suggestion generated by the provisional automated agent, means for evaluating the provisional automated agent by comparing the provisional suggestion to suggestions generated by a number of in-service automated agents in the federation of automated agents, and means for adding the provisional automated agent to the plurality of in-service automated agents in response to the evaluating.

These and other aspects of example embodiments will become clear in the figures and the detailed description therein.

### BRIEF DESCRIPTION OF DRAWINGS

Some example embodiments will become more fully understood from the detailed description given herein below and the accompanying drawings, wherein like elements are represented by like reference numerals, which are given by way of illustration only and thus are not limiting of this disclosure.
FIG. 1 illustrates an environment in which one or more example embodiments may be implemented;
FIG. 2 illustrates a method of controlling a federation of in-service automated agents, according to some example embodiments;
FIG. 3 illustrates an example of a user interface, according to some example embodiments;
FIG. 4 illustrates a method of routing a ticket based on a complexity of the ticket, according to some example embodiments;
FIG. 5 illustrates a method of generating a suggestion to respond to a ticket, according to some example embodiments;
FIG. 6 illustrates a method of generating a subset of suggestions for responding to a ticket by filtering a set of suggestions, according to some example embodiments;
FIG. 7 illustrates a method of providing a subset of suggestions for responding to a ticket, according to some example embodiments;
FIG. 8 illustrates a method of adjusting a rating of an in-service automated agent, according to some example embodiments;
FIG. 9 illustrates a method of introducing a new software agent into the federation of in-service automated agents, according to some example embodiments; and
FIG. 10 illustrates a device for executing methods associated with a federation of in-service automated agents, according to some example embodiments.

### DETAILED DESCRIPTION

Various example embodiments will now be described more fully with reference to the accompanying drawings in which some example embodiments are shown.

Detailed illustrative embodiments are disclosed herein. However, specific structural and functional details disclosed herein are merely representative for purposes of describing example embodiments.

Accordingly, while example embodiments are capable of various modifications and alternative forms, the embodiments are shown by way of example in the drawings and will be described herein in detail. refer to like elements throughout the description of the figures.

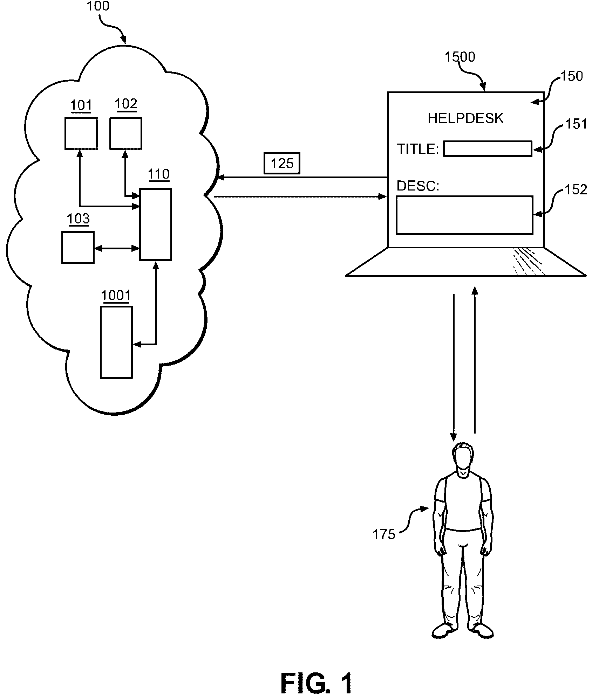

FIG. 1 illustrates an environment in which example embodiments may be implemented.

Referring to FIG. 1, an environment 1 may include a federation of software agents 100 and a device 1500 having a user interface 150. The user interface 150may be accessed by a user 175.

The federation of software agents 100 may include hardware and/or software running on a single computer, or, alternatively, running on a collection of computers (not shown). The collection of computers may be distributed, for example distributed over a network of computers.

The collection of computers may include a plurality of automated agents 101, 102, 103. At least some of the plurality of automated agents 101, 102, 103 may be implemented via computer-readable instructions that, when executed by the computer, cause the computer to provide suggestions for responding to a ticket. For example, at least some of the plurality of automated agents 101, 102, 103 may be implemented as software for executing a neural network and/or a machine-learning algorithm and/or an expert system. At least some of the automated agents 101, 102, 103 may have a corresponding rating indicative of a quality of suggestions offered by the agents.

At least some of the plurality of automated agents 101, 102, 103 may be trained, in a training phase, to generate responses to outstanding tickets. The training of the automated agents may be done differently for different automated agents. For example, training of automated agent 101 may include training of a neural network and/or a machine-learning algorithm using a first training set, containing first example tickets and corresponding first suggestions for responding to the first example tickets. Training of automated agent 102 may include training of a neural network and/or a machine-learning algorithm using a second training set, containing second example tickets and corresponding second suggestions for responding to the second example tickets.

The federation of software agents 100 may include a service manager 110. The service manager 110 may be implemented via computer-readable instructions that, when executed by the computer, cause the computer to perform one or more methods according to example embodiments. For example, the service manager 110 may receive a ticket 125 through the device 1500 displaying the user interface 150, determine a complexity of the ticket 125, and choose a subset of the plurality of automated agents 101, 102, 103 for providing suggestions through the user interface 150. The service manager 110 may also request feedback from the user 175 through the user interface 150, including a rating indicative of the quality of the suggestions.

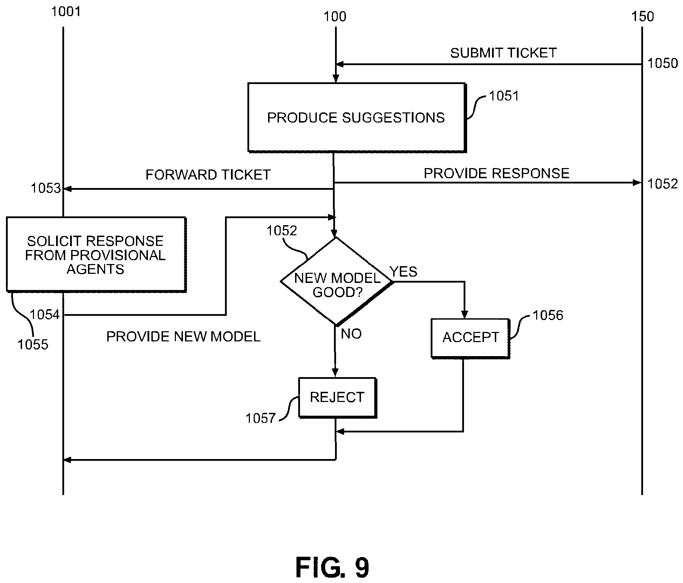

The federation of software agents 100 may also include a training manager 1001. The training manager 1001 may manage a number of provisional agents (not shown) that are being trained. The training manager 1001 will be discussed further with reference to FIG. 9.

The components of the federation of software agents 100 may communicate with each other. For example, each of, or at least some of, the plurality of software agents 101, 102, 103 may communicate with the service manager 110. For example, the components of the federation of software agents 100 may communicate over a network with one another.

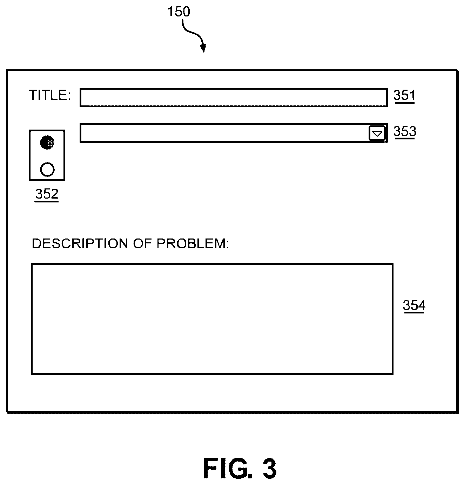

The user interface 150 may be or include a graphical user interface (GUI), for example a graphical user interface presented on a website and/or within an app, such as a mobile app. If the user 175 desires suggestions for addressing a technical problem, then the user 175 may engage with the user interface 150 to submit a ticket 125. The user interface 150 will be described in more detail later with reference to FIG. 3.

The user 175 may be a user of a system and/or a technology. As an example, the user 175 may be a technician responsible for the maintenance of equipment associated with a mobile network. As an example, the user 175 may be a user of a software, such as an operating system and/or word processing system and/or application used in an office environment. As another example, the user 175 may be a user of a computer game or computer gaming system. As yet another example, the user 175 may be a user of a system associated with the delivery of healthcare. Example embodiments are not limited to those above, and one of ordinary skill in the art may readily recognize other example embodiments. The system may be operated based on the suggestions provided by the software agents.

As an example, the user 175 may request support for a new customer fault, and request suggestions for responding to the new customer fault.

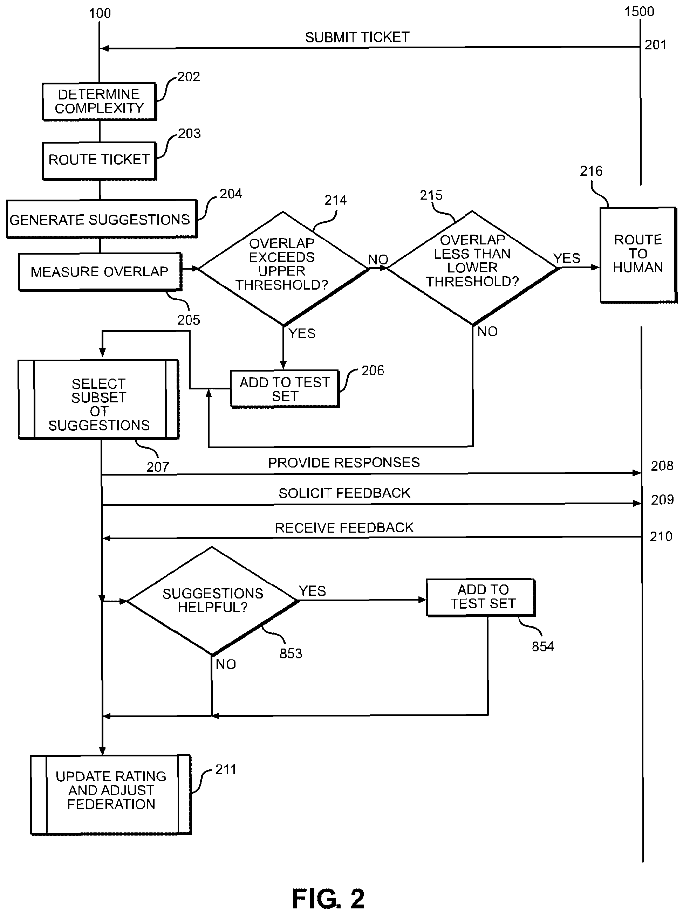

FIG. 2 illustrates a method of controlling a federation of software agents according to some example embodiments.

Referring to FIG. 2, in step 201, the user 175 may request a suggestion for support in resolving a technical issue by submitting a ticket 125 to the federation of automated agents 100 via the device 1500. The user 175 may use the user interface 150 to submit the ticket 125 to the service manager 110 in the federation of automated agents 100.

In step 202, the service manager 110 may determine a complexity of the ticket 125. For example, the service manager 110 may count a number of characters and/or a number of words within the description field 354, and may determine the complexity of the ticket based on the number of words.

The federation of automated agents 100 may determine that the ticket 125 is simple or complicated, depending on the fields. Example embodiments are not limited to a review of the description field 354, and may include a review of other fields within the ticket 125.

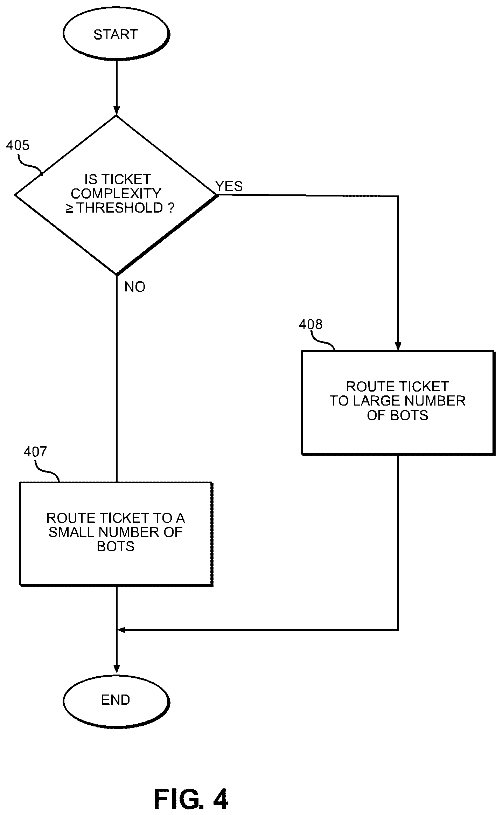

In step 203, the service manager 110 may route the ticket 125 to a number of automated agents. The number of automated agents may be determined based on the complexity of the ticket 125. Example embodiments of a method for routing the ticket 125 will be described in more detail below with reference to FIG. 4.

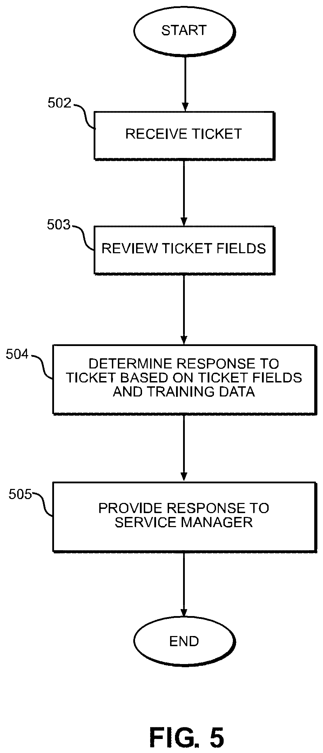

In step 204, the automated agents which received the ticket 125 may generate one or more suggestions for responding to the ticket 125. Example methods for the generation of one or more suggestions will be described in more detail later with reference to FIG. 5.

In step 205, the service manager 110 may collate the suggestions from the automated agents, and may determine an amount of similarity by measuring an amount of overlap in the collated suggestions. For example, if the service manager 110 routes the ticket 125 to each of the automated agents 101, 102, 103, and each of the automated agents 101, 102, 103 provides the same suggestion for responding to the ticket 125, then the amount of overlap may be relatively high. However, if each of the automated agents 101, 102, 103 provides different suggestions for responding to the ticket 125, then the amount of overlap may be relatively low.

In step 214, the service manager 110 may compare the amount of similarity to an upper similarity threshold. The upper similarity threshold may be determined, e.g., determined by an operator (e.g., a human or a network), and may be based on empirical data.

For example, an amount of overlap may be equal to a ratio between a number of suggestions generated by each of the in-service automated agents 101, 102, 103 that are the same, and a total number of in-service automated agents 101, 102, 103 that generated a suggestion. For example, if each of the in-service automated agents 101, 102, 103 generated the same suggestion for responding to the ticket 125, then the overlap may be 100%. Alternatively, if each of the in-service automated agents 101, 102, 103 generated different suggestions for responding to the ticket 125, then the overlap may be 0%.

For example, the upper similarity threshold may correspond to an 80% overlap.

If the amount of overlap exceeds the upper similarity threshold, both the ticket 125 and the suggestions generated by the automated agents may be added to a test set in step 206. The test set may be used in the training of provisional agents. Example methods for the training of provisional agents will be described in more detail later with reference to FIG. 9.

Returning to step 214, if the amount of overlap does not exceed the upper similarity threshold, then in step 215, the service manager 110 compares the overlap to a lower similarity threshold. The lower similarity threshold may be less than the upper similarity threshold. The lower similarity threshold may be defined by an operator (e.g., human or network) based on data.

For example, the lower similarity threshold may correspond to a 50% overlap in the same suggestions generated by the agents within the federation of automated agents 100.

If the overlap is less than the lower similarity threshold, then the ticket 125 may be routed to a human expert for further review in step 216.

Returning to step 215, if the overlap is not less than the lower similarity threshold, then the method proceeds to step 207.

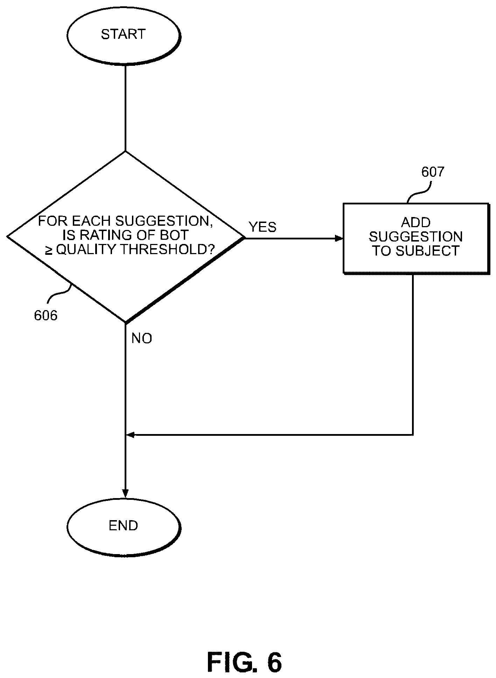

In step 207, the service manager 110 may select a subset of suggestions to present to the user 175 through the user interface 150. For example, the service manager 110 may select the subset of suggestions based on a rating of the automated agents, and/or the amount of overlap among the suggestions. Example methods for the determination of the subset of suggestions will be described in more detail later with respect FIG. 6.

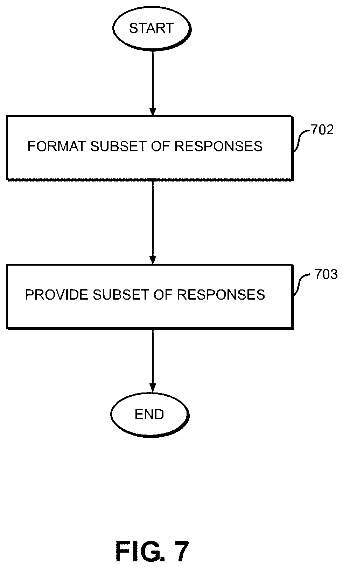

In step 208, the service manager 110 may provide the subset of suggestions to the user 175 (e.g., through the user interface 150). Example methods for the providing of the subset of suggestions will be described in more detail later with respect to FIG. 7.

In step 209, the service manager 110 may solicit feedback from the user 175 through the user interface 150. For example, the service manager 110 may send a message to the user 175 through the user interface 150 and/or through some other method of communication. The message may be or include a request for feedback on the quality of suggestions offered to the user 175 described above with reference to step 208.

In step 210, the service manager 110 may receive feedback from the user 175 through the user interface 150. The feedback may indicate a level of satisfaction of each of, or some of, the suggestions provided in step 208. The user 175 may indicate that he or she was very or extremely satisfied, somewhat satisfied, neutral, somewhat dissatisfied, or not satisfied at all, to each of, or at least some of, the suggestions provided in step 208.

In step 853, the service manager 110 may determine whether the response was helpful, based on the feedback. For example, the user 175 may provide a numerical value indicative of a level of satisfaction with the suggestions provided in step 208. For example, the user 175 may indicate that he or she is satisfied at a certain level on a ten-point scale. The numerical value may be compared with a feedback threshold. The feedback threshold may be defined by an operator (e.g., human or network) based on empirical data.

For example, the feedback threshold may correspond to a numerical value of a level of satisfaction being 8 out of 10 or higher.

If the numerical value associated with the feedback exceeds the feedback threshold, then in step 854, the ticket 125 and the suggestions generated by the automated agents that were rated useful by the user 175 may be added to a test set.

In step 211, the service manager 110 may update the rating of the in-service automated agents that provided a suggestion, based on the feedback received from the user 175 in step 210. Furthermore, the membership of in-service automated agents in the federation of automated agents 100 may be adjusted based on the rating. For example, an automated agent that has been underperforming may be retired from the federation of automated agents 100.

Further, a provisional automated agent that has provided provisional suggestions may be included in the federation of automated agents 100. Example methods for adjusting the federation of automated agents 100 will be described later with reference to FIG. 9.

Returning to step 853, if the numerical value associated with the feedback is less than or equal to the feedback threshold, then the process proceeds to step 211, and continues as discussed above.

Thus, based on the method outlined in FIG. 2, more complicated tickets may have more useful suggestions provided. Further, by measuring the level of similarity in the suggestions, new automated software agents may be added to the federation of software agents, without extensive training (e.g., training with human input). Further, a decision may be made to retire a software agent that provides outlier and/or inconsistent suggestions. This may help simplify the federation of automated agents 100. Furthermore, by measuring a level of similarity, a determination may be made to forward the ticket to request help of a human expert, thus improving the quality of suggestions provided to the user.

FIG. 3 illustrates an example of a user interface according to some example embodiments.

Referring to FIG. 3, the user interface 150 may be presented as a graphical user interface (GUI). The GUI may include a number of fields that may be filled in by a user, for example the user 175. For example, the user interface 150 may include a title field 351, a button field 352, a drop-down list field 353, and/or a description field 354.

The user 175 may identify a title to the ticket 125 to be submitted, and enter this into the title field 351. Further, the user 175 may check a box in the button field 352 and/or choose an item from a drop-down list field 353. Still further, the user 175 may provide a more detailed description of the problem in the description field 354. The description field 354 may allow for a user to draft, in free form, a description of the problem for which he or she requests support. The description field 354 may include natural language.

Example embodiments are not limited thereto. The design of the user interface 150 illustrated in FIG. 3 is not limited thereto, and more or fewer fields may be presented to a user for request.

The user interface 150 may be presented as a website on the device 1500, and/or may be presented on a mobile app of a mobile device. Example embodiments are not limited to these examples.

FIG. 4 illustrates a method of routing a ticket to a number of automated agents, according to some example embodiments. The method may be performed by the service manager 110.

Referring to FIG. 4, in step 405, the service manager 110 may decide if the complexity of the ticket 125 is high, for example higher than a ticket complexity threshold. For example, if there are a relatively large number of words, e.g. between five and fifty words, in the description field 354, then the service manager 110 may determine that the ticket 125 is complicated. Alternatively, if there are a relatively small number of words (e.g., less than five words) in the description field 354, then the service manager 110 may determine that the ticket 125 is simple.

If the complexity of the ticket 125 exceeds the ticket complexity threshold, then in step 408 the service manager 110 may route (e.g., forward) the ticket 125 to a large number of in-service automated agents. For example, if the ticket 125 has a complexity exceeding the ticket complexity threshold, the federation of automated agents 100 may route the ticket 125 to three, four, or five in-service automated agents. For example, the service manager 110 may route the ticket to three, four, or five random in-service automated agents.

Returning to step 405, if the complexity of the ticket 125 does not exceed the ticket complexity threshold, then in step 407 the service manager 110 may route (e.g., forward) the ticket 125 to a smaller number of in-service automated agents. For example, if the ticket 125 has a complexity not exceeding the ticket complexity threshold, the service manager 110 may route the ticket to one or two in-service automated agents. For example, the service manager 110 may route the ticket to one or two random in-service automated agents.

FIG. 5 illustrates a method of generating a suggestion for responding to a ticket, according to some example embodiments.

For example purposes, the method of FIG. 5 will be discussed with respect to automated agent 101. However, each automated agent may perform the method to generate one or more suggestions for responding to a ticket.

Referring to FIG. 5, at step 502 the automated agent 101 may receive the ticket 125.

In step 503, the automated agent 101 may review at least some of the fields included in the ticket 125. For example, the automated agent 101 may parse the words associated with the description field 354 to determine which issue is to be addressed. For example, the automated agent 101 may parse the words associated with the description field 354 to determine key words associated with the ticket 125.

In step 504, the automated agent 101 may compare the fields included in the ticket 125 to a training set used to train the automated agent 101. The training set may have been generated from historical data, and further may be augmented during a process described in more detail later with reference to FIG. 6.

Based on a comparison, the automated agent 101 may generate one or more suggestions for responding to the ticket 125. For example, if the automated agent 101 is embodied as a neural network trained to review the free form content of the description field 354, then the automated agent 101 may generate a suggestion based on the features of the trained neural network.

For example, the automated agent may generate a suggestion based on a k-nearest neighbor algorithm and/or an algorithm to determine the joint complexity between the ticket 125 and the training set. The automated agent 101 may generate the suggestion corresponding to suggestions having the nearest neighbor and/or the highest joint complexity between the ticket 125 and the training set.

The suggestion may be a suggestion chosen from a list of suggestions. For example, the list of suggestions may have been previously generated. For example, the list of suggestions may include discussions in a reference manual. The list of suggestions may be stored in a database and/or a data structure.

In step 505, the automated agent 101 may provide (e.g., transmit) the one or more suggestions to the service manager 110.

FIG. 6 illustrates a method of generating a subset of suggestions for responding to a ticket, according to some example embodiments.

Referring to FIG. 6, in step 606, the service manager 110 may review a rating (e.g., a quality rating) associated with the automated agents that generated a response.

For each automated agent, if the quality rating of the automated agent exceeds a quality rating threshold, then in step 607 the service manager 110 may add the suggestion to a subset of responses to be presented to the user through the user interface. The quality rating threshold may be defined by an operator (e.g., human or network) based on empirical data.

For example, the quality rating threshold may have a numerical value corresponding to an average level of satisfaction being 8 on a ten-point scale, based on user feedback.

FIG. 7 illustrates a method of providing a subset of suggestions to respond to a ticket, according to some example embodiments.

The service manager 110 may prepare the suggestions to present to the user 175 through the user interface 150.

Referring to FIG. 7, in step 702 the service manager 110 may collate and sort the suggestions based on a likelihood of usefulness to format the suggestions to send to the user 175. The suggestions may be sorted based on an amount of overlap. For example, if a first suggestion has been generated by three of five automated agents (e.g., automated agents 101, 102, 103), then the first suggestion may be ordered first. If a second suggestion has been generated by only two of the five automated agents (e.g., automated agents 101, 102), then the second suggestion may be ordered second.

In step 703, the service manager 110 may provide the subset of responses to the user 175. The subset of responses may be provided through the user interface 150, and/or through an e-mail, and/or through a text message, and/or through some other method of communicating with the user 175. Example embodiments are not limited to these examples.

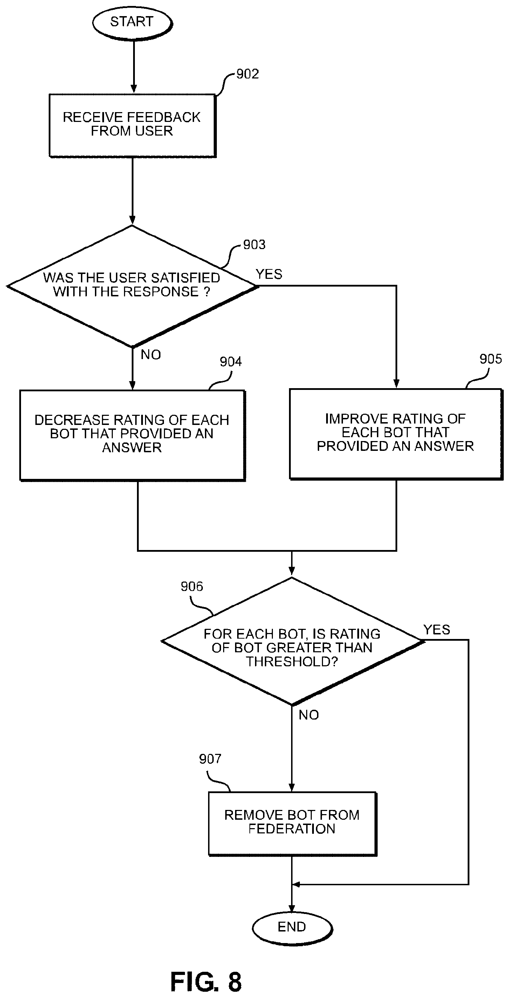

FIG. 8 illustrates a method of adjusting a rating of an in-service automated agent, according to some example embodiments.

At least some of the automated agents 101, 102, 103 may have a corresponding rating. In one example, the corresponding rating may be a corresponding quality rating (e.g., a numerical value associated with the quality of suggestions provided by the automated agents 101, 102, 103). The rating may be adjusted based on feedback from the user 175.

For example, in step 902 the service manager 110 may receive feedback from the user 175.

In step 903, the service manager 110 may determine whether the user 175 was satisfied with the suggestion.

If the user 175 indicated that he or she was not satisfied with the suggestion, for example by giving a low numerical value to the suggestion, then at step 904 the rating of automated agents that provided the suggestion for which the user 175 was not satisfied may be reduced.

In step 906, the service manager 110 may compare the numerical value of the rating of each automated agents 101, 102, 103 to a delisting threshold. The delisting threshold may be defined by an operator (e.g., human or network) based on empirical data.

For example, the delisting threshold may correspond to a rating threshold of two out of ten, on a ten point scale.

Any of the automated agents 101, 102, 103 with a rating less than the delisting threshold may be removed from and/or retired from the federation of automated agents 100 in step 907. Thus, the federation of automated agents 100 may be reduced and/or simplified.

Returning to step 903, if the user 175 was satisfied with the suggestion, then in step 905 the service manager 110 may increase the rating of the in-service automated agents that provided the suggestions with which the user 175 was satisfied. Still further, the suggestion may be added to the test set, as described with reference to step 206.

FIG. 9 illustrates a method of introducing a new software agent into the federation of software agents, according to some example embodiments.

The federation of automated agents 100 may be populated with in-service automated agents. An in-service automated agent may be trained in the generation of suggestions for responding to tickets such as ticket 125. For example, the in-service automated agent may be embodied as a neural network and/or a machine learning algorithm and/or an expert system, and may be trained in the generation of suggestions based on a test set.

However, before a new automated agent is added to an established federation of automated agents 100, the new automated agent may be treated as a provisional agent.

Referring to FIG. 9, there may be the training manager 1001 that manages a number of provisional agents (not shown) that are being trained.

Initially, in step 1050, the user 175 may submit the ticket 125 through the user interface 150. The federation of automated agents 100 may receive the ticket.

In step 1051, the federation of automated agents 100 may produce one or more suggestions for responding to the ticket 125. The federation of automated agents 100 may produce one or more suggestions according to the methods outlined with reference to FIGS. 2-7.

In step 1052, the service manager 110 may provide the suggestions through the user interface 150 to the user 175. Furthermore, in step 1053, the federation of automated agents 100 may forward the ticket 125 to the training manager 1001.

In step 1055, the training manager 1001 may provide the ticket 125 to a number of provisional automated agents. The training manager 1001 may forward a response from at least one of the provisional automated agents to the service manager 110 in the federation of automated agents 100 in step 1054. The ticket 125 provided to the provisional agents may correspond to a ticket 125 marked as training data in step 206.

In step 1052, the service manager 110 may review and evaluate the response generated by the provisional agent(s). For example, the service manager 110 may compare and determine a model precision and recall score of the response(s) generated by the provisional agent.

For example, the service manager 110 may determine a precision score corresponding to a fraction of the suggestions provided by the provisional agent(s) that are the same as the suggestions generated by the plurality of in-service automated agents 101, 102, 103. The service manager 110 may determine a recall score corresponding to a fraction of the suggestions generated by the plurality of in-service automated agents 101, 102, 103 that are the same as the suggestions generated by the provisional agent(s).

The service manager 110 may determine the model precision and recall score, which relates the precision score to the recall score, to determine a measurement of the quality of the suggestions from the provisional agent(s). The model precision and recall score may be twice the ratio of the product of the precision score and recall score divided by the sum of the precision and recall score. Twice the ratio of the product of the precision score and recall score divided by the sum of the precision and recall score may also be called the F1 score. The model precision and recall score may be expressed as a ratio, and/or a fraction, and/or a percentage.

If the model precision and recall score is greater than or equal to an entrance threshold, then the provisional agent is accepted and deployed within the federation of automated agents in step 1056.

The entrance threshold may be defined by an operator (e.g., human or network) based on empirical data. For example, the entrance threshold may correspond to an F1 score of 50%.

If the model precision and recall score is less than the entrance threshold, the provisional agent is not accepted and is not deployed within the federation of automated agents in step 1057.

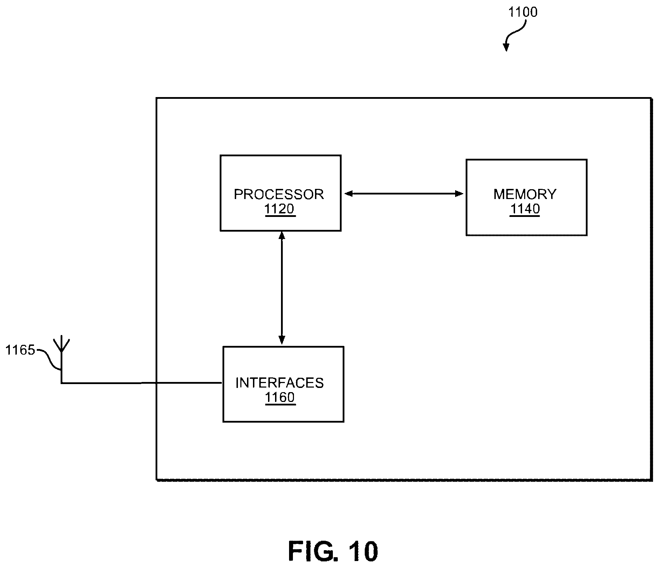

FIG. 10 illustrates a device for implementing one or more of the service manager 110, one or more of the automated agents 101, 102, 103, one or more of the training manager 1001, etc., according to some example embodiments.

As shown, a device 1100 may include a memory 1140; a processor 1120 connected to the memory 1140; various interfaces 1160 connected to the processor 1120; and one or more connections 1165 connected to the various interfaces 1160.

The memory 1140 may be a computer readable storage medium that generally includes a random access memory (RAM), read only memory (ROM), and/or a permanent mass storage device, such as a disk drive. The memory 1140 also stores an operating system and any other routines/modules/applications for providing the functionalities of the device 1100 to be executed by the processor 1120. These software components may also be loaded from a separate computer readable storage medium into the memory 1140 using a drive mechanism (not shown). Such separate computer readable storage medium may include a disc, tape, DVD/CD-ROM drive, memory card, or other like computer readable storage medium (not shown). In some example embodiments, software components may be loaded into the memory 1140 via one of the various interfaces 1160, rather than via a computer readable storage medium.

The processor 1120 may be configured to carry out instructions of a computer program by performing the arithmetical, logical, and input/output operations of the system. Instructions may be provided to the processor 1120 by the memory 1140.

For example, the processor 1120 may be configured to carry out instructions corresponding to any of the methods described above with reference to FIGS. 2 and/or 4-10.

The various interfaces 1160 may include components that interface the processor 1120 with other input/output components. As will be understood, the various interfaces 1160 and programs stored in the memory 1140 to set forth the special purpose functionalities of the device 1100 will vary depending on the implementation of the device 1100.

The interfaces 1160 may also include one or more user input devices (e.g., a keyboard, a keypad, a mouse, a touch-screen, and/or the like) and user output devices (e.g., a display, a speaker, a touch-screen, and/or the like).

One or more example embodiments provide mechanisms for determining when to induct (e.g. introduce) newly trained automated software agents into the federation of software agents. One or more example embodiments provide mechanisms for developing example test sets of tickets and corresponding suggestions. Furthermore, one or more example embodiments may provide mechanisms for determining when to involve more than one software agent in the generation of suggestions. Furthermore, one or more example embodiments provide mechanisms for determining when to deregister/retire underperforming software agents from the federation may be desirable. Still further, one or more example embodiments provide mechanisms for determining when a ticket should be routed to an expert human for review.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

When an element is referred to as being "connected," or "coupled," to another element, it can be directly connected or coupled to the other element or intervening elements may be present. By contrast, when an element is referred to as being "directly connected," or "directly coupled," to another element, there are no intervening elements present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Specific details are provided in the following description to provide a thorough understanding of example embodiments. However, it will be understood by one of ordinary skill in the art that example embodiments may be practiced without these specific details. For example, systems may be shown in block diagrams so as not to obscure the example embodiments in unnecessary detail. In other instances, well-known processes, structures and techniques may be shown without unnecessary detail in order to avoid obscuring example embodiments.

As discussed herein, illustrative embodiments are described with reference to acts and symbolic representations of operations (e.g., in the form of flow charts, flow diagrams, data flow diagrams, structure diagrams, block diagrams, etc.) that may be implemented as program modules or functional processes include routines, programs, objects, components, data structures, etc., that perform particular tasks or implement particular abstract data types and may be implemented using existing hardware at, for example, existing network management devices, network management entities, clients, gateways, nodes, agents, controllers, computers, cloud based servers, web servers, proxies or proxy servers, application servers, load balancers or load balancing servers, device management servers, or the like. As discussed later, such existing hardware may include, inter alia, one or more Central Processing Units (CPUs), system-on-chip (SOC) devices, digital signal processors (DSPs), application-specific-integrated-circuits, field programmable gate arrays (FPGAs) computers or the like.

Although a flow chart may describe the operations as a sequential process, many of the operations may be performed in parallel, concurrently or simultaneously. In addition, the order of the operations may be re-arranged. A process may be terminated when its operations are completed, but may also have additional steps not included in the figure. A process may correspond to a method, function, procedure, subroutine, subprogram, etc. When a process corresponds to a function, its termination may correspond to a return of the function to the calling function or the main function.

As disclosed herein, the term "storage medium", "computer readable storage medium" or "non-transitory computer readable storage medium" may represent one or more devices for storing data, including read only memory (ROM), random access memory (RAM), magnetic RAM, core memory, magnetic disk storage mediums, optical storage mediums, flash memory devices and/or other tangible machine readable mediums for storing information. The term "computer-readable medium" may include, but is not limited to, portable or fixed storage devices, optical storage devices, and various other mediums capable of storing, containing or carrying instruction(s) and/or data.

Furthermore, example embodiments may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a computer readable storage medium. When implemented in software, a processor or processors will perform the necessary tasks.

A code segment may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or transmitted via any suitable means including memory sharing, message passing, token passing, network transmission, etc.

The terms "including" and/or "having", as used herein, are defined as comprising (i.e., open language). The term "coupled", as used herein, is defined as connected, although not necessarily directly, and not necessarily mechanically. Terminology derived from the word "indicating" (e.g., "indicates" and "indication") is intended to encompass all the various techniques available for communicating or referencing the object/information being indicated. Some, but not all, examples of techniques available for communicating or referencing the object/information being indicated include the conveyance of the object/information being indicated, the conveyance of an identifier of the object/information being indicated, the conveyance of information used to generate the object/information being indicated, the conveyance of some part or portion of the object/information being indicated, the conveyance of some derivation of the object/information being indicated, and the conveyance of some symbol representing the object/information being indicated.

According to example embodiments, network management devices, network management entities, clients, gateways, nodes, agents controllers, computers, cloud based servers, web servers, application servers, proxies or proxy servers, load balancers or load balancing servers, device management servers, or the like, may be (or include) hardware, firmware, hardware executing software or any combination thereof. Such hardware may include one or more Central Processing Units (CPUs), system-on-chip (SOC) devices, digital signal processors (DSPs), application-specific-integrated-circuits (ASICs), field programmable gate arrays (FPGAs) computers or the like configured as special purpose machines to perform the functions described herein as well as any other well-known functions of these elements. In at least some cases, CPUs, SOCs, DSPs, ASICs and FPGAs may generally be referred to as processing circuits, processors and/or microprocessors.

Benefits, other advantages, and solutions to problems have been described above with regard to specific embodiments of the invention. However, the benefits, advantages, solutions to problems, and any element(s) that may cause or result in such benefits, advantages, or solutions, or cause such benefits, advantages, or solutions to become more pronounced are not to be construed as a critical, required, or essential feature or element of any or all the claims.

Reference is made in detail to embodiments, examples of which are illustrated in the accompanying drawings, wherein like reference numerals refer to the like elements throughout. Accordingly, the example embodiments are merely described above, by referring to the figures, to explain example embodiments. Aspects of various embodiments are specified in the claims.

## Claims

1. A method of controlling a federation of automated agents, the federation of automated agents including a plurality of in-service automated agents, the method comprising:
receiving a ticket from a terminal;
routing the ticket to a number of in-service automated agents among the plurality of in-service automated agents;
measuring a similarity of suggestions generated by the number of in-service automated agents among the plurality of in-service automated agents, the suggestions being suggestions for responding to the ticket;
determining a subset of the suggestions based on a rating of the number of in-service automated agents and the similarity of suggestions generated by the number of in-service automated agents, the rating being based on a previous score indicative of a quality of a previous subset of suggestions provided by the number of in-service automated agents; and
providing the subset of suggestions to the terminal.

2. A method as in claim 1, further comprising:
receiving, from the terminal, a score indicative of a quality of the subset of suggestions; and
updating the rating of the number of in-service automated agents based on the score.

3. A method as in any one of claims 1-2, wherein the ticket includes a number of fields, and the method further comprises:
measuring a complexity of the ticket based on at least one of the fields; and
determining the number of in-service automated agents based on the complexity.

4. A method as in claim 3, wherein the measuring a complexity of the ticket includes,
measuring the complexity of the ticket based on a number of words in a description field of the ticket.

5. A method as in claim 2, further comprising:
soliciting the score indicative of the quality of the subset of suggestions provided to the terminal.

6. A method as in any one of claims 1-5, further comprising:
adding the ticket and a suggestion generated by at least one of the number of in-service automated agents to a test set based on the similarity of suggestions.

7. A method as in any one of claims 1-6, further comprising:
removing at least one in-service automated agent from the federation of automated agents based on the rating of the at least one in-service automated agent.

8. A method as in any one of claims 1-7, further comprising:
generating, by the number of in-service automated agents in the federation of automated agents, at least one suggestion for responding to the ticket.

9. A method as in any one of claims 1-8, wherein the generating, by the number of agents in the federation of automated agents, at least one suggestion for responding to the ticket includes,
reviewing a description field;
comparing a description field to a training set; and
generating the at least one suggestion based on the comparison of the description field to the training set.

10. A method as in any one of claims 1-9, wherein the determining a subset of suggestions based on a rating of the number of in-service automated agents and the similarity of suggestions generated by the number of in-service automated agents includes,
consolidating the suggestions from the number of in-service automated agents;
reviewing a rating associated with the number of in-service automated agents; and
adding the suggestion to the subset of suggestions based on the review of the rating.

11. A method as in any one of claims 1-10, further comprising:
adding the ticket and at least one of the suggestions to a test set in response to the score indicative of the quality of the subset of suggestions being greater than a quality rating threshold.

12. A method as in any one of claims 1-11, further comprising:
adding the ticket and at least one of the suggestions to a test set in response to a level of similarity of the suggestions being greater than a similarity threshold.

13. An apparatus to control a federation of automated agents, the federation of automated agents including a plurality of in-service automated agents, the apparatus comprising:
at least one processor; and
at least one memory including computer program code;
the at least one memory and the computer program code being configured to, with the at least one processor, cause the apparatus to:
receive a ticket from a terminal,
route the ticket to a number of in-service automated agents among the plurality of in-service automated agents,
measure a similarity of suggestions generated by the number of in-service automated agents among the plurality of in-service automated agents, the suggestions being suggestions for responding to the ticket,
determine a subset of the suggestions based on a rating of the number of in-service automated agents and the similarity of suggestions generated by the number of in-service automated agents, the rating being based on a previous score indicative of a quality of a previous subset of suggestions provided by the number of in-service automated agents, and
provide the subset of suggestions to the terminal.

14. The apparatus according to claim 13, wherein the at least one memory and the computer program code are configured to, with the at least one processor, cause the apparatus to,
receive, from the terminal, a score indicative of a quality of the subset of suggestions; and
update the rating of the number of in-service automated agents based on the score.

15. The apparatus according to any one of claims 13-14, wherein the at least one memory and the computer program code are configured to, with the at least one processor, cause the apparatus to,
solicit a score indicative of the quality of the subset of suggestions provided to the terminal.

## Patentansprüche

1. Verfahren zum Steuern einer Föderation von automatisierten Agenten, wobei die Föderation von automatisierten Agenten eine Vielzahl von dienstinternen automatisierten Agenten beinhaltet, wobei das Verfahren Folgendes umfasst:
Empfangen eines Tickets von einem Endgerät;
Routen des Tickets zu einer Anzahl von dienstinternen automatisierten Agenten unter der Vielzahl von dienstinternen automatisierten Agenten;
Messen einer Ähnlichkeit von Vorschlägen, die von der Anzahl von dienstinternen automatisierten Agenten unter der Vielzahl von dienstinternen automatisierten Agenten erzeugt werden, wobei die Vorschläge Vorschläge zum Antworten auf das Ticket sind;
Bestimmen eines Untersatzes der Vorschläge auf Basis einer Beurteilung der Anzahl von dienstinternen automatisierten Agenten und der Ähnlichkeit von Vorschlägen, die von der Anzahl von dienstinternen automatisierten Agenten erzeugt wurden, wobei die Beurteilung auf Basis einer vorherigen Bewertung erfolgt, die eine Qualität eines vorherigen Untersatzes von Vorschlägen anzeigt, die von der Anzahl von dienstinternen automatisierten Agenten bereitgestellt wurden; und
Bereitstellen des Untersatzes von Vorschlägen für das Endgerät.

2. Verfahren nach Anspruch 1, das ferner Folgendes umfasst:
Empfangen einer Bewertung, die eine Qualität des Untersatzes von Vorschlägen anzeigt, vom Endgerät; und
Aktualisieren der Beurteilung der Anzahl von dienstinternen automatisierten Agenten auf Basis der Bewertung.

3. Verfahren nach einem der Ansprüche 1 bis 2, wobei das Ticket eine Anzahl von Feldern beinhaltet, und das Verfahren ferner Folgendes umfasst:
Messen einer Komplexität des Tickets auf Basis von mindestens einem der Felder; und
Bestimmen der Anzahl von dienstinternen automatisierten Agenten auf Basis der Komplexität.

4. Verfahren nach Anspruch 3, wobei das Messen einer Komplexität des Tickets Folgendes beinhaltet,
Messen der Komplexität des Tickets auf Basis einer Anzahl von Wörtern in einem Beschreibungsfeld des Tickets.

5. Verfahren nach Anspruch 2, das ferner Folgendes umfasst:
Anfordern der Bewertung, die die Qualität des Untersatzes von Vorschlägen anzeigt, die dem Endgerät bereitgestellt wurden.

6. Verfahren nach einem der Ansprüche 1 bis 5, das ferner Folgendes umfasst:
Hinzufügen des Tickets und eines Vorschlags, der von mindestens einem der Anzahl von dienstinternen automatisierten Agenten erzeugt wurde, zu einem Testsatz auf Basis der Ähnlichkeit von Vorschlägen.

7. Verfahren nach einem der Ansprüche 1 bis 6, das ferner Folgendes umfasst:
Entfernen von mindestens einem dienstinternen automatisierten Agenten aus der Föderation von automatisierten Agenten auf Basis der Beurteilung des mindestens einen dienstinternen automatisierten Agenten.

8. Verfahren nach einem der Ansprüche 1 bis 7, das ferner Folgendes umfasst:
Erzeugen von mindestens einem Vorschlag zum Antworten auf das Ticket durch die Anzahl von dienstinternen automatisierten Agenten in der Föderation der automatisierten Agenten.

9. Verfahren nach einem der Ansprüche 1 bis 8, wobei das Erzeugen von mindestens einem Vorschlag zum Antworten auf das Ticket durch die Anzahl von Agenten in der Föderation von automatisierten Agenten Folgendes beinhaltet,
Überprüfen eines Beschreibungsfeldes;
Vergleichen eines Beschreibungsfeldes mit einem Trainingssatz; und
Erzeugen des mindestens einen Vorschlags auf Basis des Vergleichs des Beschreibungsfeldes mit dem Trainingssatz.

10. Verfahren nach einem der Ansprüche 1 bis 9, wobei das Bestimmen eines Untersatzes von Vorschlägen auf Basis einer Beurteilung der Anzahl von dienstinternen automatisierten Agenten und der Ähnlichkeit von Vorschlägen, die von der Anzahl von dienstinternen automatisierten Agenten erzeugt wurden, Folgendes beinhaltet,
Konsolidieren der Vorschläge aus der Anzahl von dienstinternen automatisierten Agenten;
Überprüfen einer Beurteilung, die mit der Anzahl von dienstinternen automatisierten Agenten verknüpft ist; und
Hinzufügen des Vorschlags zum Untersatz von Vorschlägen auf Basis der Überprüfung der Beurteilung.

11. Verfahren nach einem der Ansprüche 1 bis 10, das ferner Folgendes umfasst:
Hinzufügen des Tickets und von mindestens einem der Vorschläge zu einem Testsatz in Reaktion auf die Bewertung, die die Qualität des Untersatzes von Vorschlägen anzeigt, die größer ist als ein Qualitätsbeurteilungsschwellwert.

12. Verfahren nach einem der Ansprüche 1 bis 11, das ferner Folgendes umfasst:
Hinzufügen des Tickets und von mindestens einem der Vorschläge zu einem Testsatz in Reaktion darauf, dass ein Maß der Ähnlichkeit der Vorschläge größer ist als ein Ähnlichkeitsschwellwert.

13. Vorrichtung zum Steuern einer Föderation von automatisierten Agenten, wobei die Föderation von automatisierten Agenten eine Vielzahl von dienstinternen automatisierten Agenten beinhaltet, wobei die Vorrichtung Folgendes umfasst:
mindestens einen Prozessor; und
mindestens einen Speicher, der einen Computerprogrammcode beinhaltet;
wobei der mindestens eine Speicher und der Computerprogrammcode dazu ausgelegt sind, die Vorrichtung mit dem mindestens einen Prozessor zu Folgendem zu veranlassen:
Empfangen eines Tickets von einem Endgerät,
Routen des Tickets zu einer Anzahl von dienstinternen automatisierten Agenten unter der Vielzahl von dienstinternen automatisierten Agenten,
Messen einer Ähnlichkeit von Vorschlägen, die von der Anzahl von dienstinternen automatisierten Agenten unter der Vielzahl von dienstinternen automatisierten Agenten erzeugt wurden, wobei die Vorschläge Vorschläge zum Antworten auf das Ticket sind,
Bestimmen eines Untersatzes der Vorschläge auf Basis einer Beurteilung der Anzahl von dienstinternen automatisierten Agenten und der Ähnlichkeit von Vorschlägen, die von der Anzahl von dienstinternen automatisierten Agenten erzeugt wurden, wobei die Beurteilung auf Basis einer vorherigen Bewertung erfolgt, die eine Qualität eines vorherigen Untersatzes von Vorschlägen anzeigt, die von der Anzahl von dienstinternen automatisierten Agenten bereitgestellt wurden, und
Bereitstellen des Untersatzes von Vorschlägen für das Endgerät.

14. Vorrichtung nach Anspruch 13, wobei der mindestens eine Speicher und der Computerprogrammcode dazu ausgelegt sind, die Vorrichtung mit dem mindestens einen Prozessor zu Folgendem zu veranlassen,
Empfangen einer Bewertung, die eine Qualität des Untersatzes von Vorschlägen anzeigt, vom Endgerät; und
Aktualisieren der Beurteilung der Anzahl von dienstinternen automatisierten Agenten auf Basis der Bewertung.

15. Vorrichtung nach einem der Ansprüche 13 bis 14, wobei der mindestens eine Speicher und der Computerprogrammcode dazu ausgelegt sind, die Vorrichtung mit dem mindestens einen Prozessor zu Folgendem zu veranlassen,
Anfordern der Bewertung, die die Qualität des Untersatzes von Vorschlägen anzeigt, die dem Endgerät bereitgestellt wurden.

## Revendications

1. Procédé de commande d'une fédération d'agents automatisés, la fédération d'agents automatisés comportant une pluralité d'agents automatisés en service, le procédé comprenant :
la réception d'un ticket d'un terminal ;
le routage du ticket vers un certain nombre d'agents automatisés en service parmi la pluralité d'agents automatisés en service ;
la mesure d'une similarité de suggestions générées par le nombre d'agents automatisés en service parmi la pluralité d'agents automatisés en service, les suggestions étant des suggestions pour répondre au ticket ;
la détermination d'un sous-ensemble de suggestions sur la base d'une appréciation du nombre d'agents automatisés en service et de la similarité de suggestions générées par le nombre d'agents automatisés en service, l'appréciation étant basée sur un score précédent indicatif d'une qualité d'un sous-ensemble précédent de suggestions fournies par le nombre d'agents automatisés en service ; et
la fourniture du sous-ensemble de suggestions au terminal.

2. Procédé selon la revendication 1, comprenant en outre :
la réception, du terminal, d'un score indicatif d'une qualité du sous-ensemble de suggestions ; et
la mise à jour de l'appréciation du nombre d'agents automatisés en service sur la base du score.

3. Procédé selon l'une des revendications 1 et 2, dans lequel le ticket comporte un certain nombre de champs, et le procédé comprend en outre :
la mesure d'une complexité du ticket sur la base d'au moins un des champs ; et
la détermination du nombre d'agents automatisés en service sur la base de la complexité.

4. Procédé selon la revendication 3, dans lequel la mesure d'une complexité du ticket comporte,
la mesure de la complexité du ticket sur la base d'un certain nombre de mots dans un champ de description du ticket.

5. Procédé selon la revendication 2, comprenant en outre :
la sollicitation du score indicatif de la qualité du sous-ensemble de suggestions fourni au terminal.

6. Procédé selon l'une des revendications 1 à 5, comprenant en outre :
l'ajout du ticket et d'une suggestion générée par au moins un du nombre d'agents automatisés en service à un ensemble de test sur la base de la similarité de suggestions.

7. Procédé selon l'une des revendications 1 à 6, comprenant en outre :
le retrait d'au moins un agent automatisé en service de la fédération d'agents automatisés sur la base de l'appréciation de l'au moins un agent automatisé en service.

8. Procédé selon l'une des revendications 1 à 7, comprenant en outre :
la génération, par le nombre d'agents automatisés en service dans la fédération d'agents automatisés, d'au moins une suggestion pour répondre au ticket.

9. Procédé selon l'une des revendications 1 à 8, dans lequel la génération d'au moins une suggestion par le nombre d'agents de la fédération d'agents automatisés pour répondre au ticket comporte,
l'examen d'un champ de description ;
la comparaison d'un champ de description à un ensemble d'entraînement ; et
la génération de l'au moins une suggestion sur la base de la comparaison du champ de description à l'ensemble d'entraînement.

10. Procédé selon l'une des revendications 1 à 9, dans lequel la détermination d'un sous-ensemble de suggestions sur la base d'une appréciation du nombre d'agents automatisés en service et de la similarité de suggestions générées par le nombre d'agents automatisés en service comporte,
la consolidation des suggestions à partir du nombre d'agents automatisés en service ;
l'examen d'une appréciation associée au nombre d'agents automatisés en service ; et
l'ajout de la suggestion au sous-ensemble de suggestions sur la base de l'examen de l'appréciation.

11. Procédé selon l'une des revendications 1 à 10, comprenant en outre :
l'ajout du ticket et d'au moins une des suggestions à un ensemble de test en réponse au fait que le score indicatif de la qualité du sous-ensemble de suggestions est supérieur à un seuil d'appréciation de la qualité.

12. Procédé selon l'une des revendications 1 à 11, comprenant en outre :
l'ajout du ticket et d'au moins une des suggestions à un ensemble de test en réponse au fait qu'un niveau de similarité de suggestions est supérieur à un seuil de similarité.

13. Appareil de commande d'une fédération d'agents automatisés, la fédération d'agents automatisés comportant une pluralité d'agents automatisés en service, l'appareil comprenant :
au moins un processeur ; et
au moins une mémoire comportant un code de programme informatique ;
l'au moins une mémoire et le code de programme informatique étant configurés pour, avec l'au moins un processeur, amener l'appareil à :
recevoir un ticket d'un terminal,
router le ticket vers un certain nombre d'agents automatisés en service parmi la pluralité d'agents automatisés en service,
mesurer une similarité de suggestions générées par le nombre d'agents automatisés en service parmi la pluralité d'agents automatisés en service, les suggestions étant des suggestions pour répondre au ticket,
déterminer un sous-ensemble de suggestions sur la base d'une appréciation du nombre d'agents automatisés en service et de la similarité de suggestions générées par le nombre d'agents automatisés en service, l'appréciation étant basée sur un score précédent indicatif d'une qualité d'un sous-ensemble précédent de suggestions fournies par le nombre d'agents automatisés en service, et
fournir le sous-ensemble de suggestions au terminal.

14. Appareil selon la revendication 13, dans lequel l'au moins une mémoire et le code de programme informatique sont configurés pour, avec l'au moins un processeur, amener l'appareil à,
recevoir du terminal un score indicatif d'une qualité du sous-ensemble de suggestions ; et
mettre à jour l'appréciation du nombre d'agents automatisés en service sur la base du score.

15. Appareil selon l'une des revendications 13 et 14, dans lequel l'au moins une mémoire et le code de programme informatique sont configurés pour, avec l'au moins un processeur, amener l'appareil à,
solliciter un score indicatif de la qualité du sous-ensemble de suggestions fourni au terminal.
